# EUROPÄISCHE PATENTSCHRIFT

(11) **EP 3 211 915 B1**
(45) Veröffentlichungstag und Bekanntmachung des Hinweises auf die Patenterteilung: **03.10.2018**
(21) Anmeldenummer: 17155667.3
(22) Anmeldetag: 10.02.2017
(51) Int. Cl.: H04Q 11/00

(54) **OPTISCHE NETZWERKENTITÄT UND GLASFASERANSCHLUSSMODUL**
OPTICAL NETWORK ENTITY, AND OPTICAL FIBRE CONNECTION MODULE
ENTITÉ DE RÉSEAU OPTIQUE ET MODULE DE RACCORD EN FIBRE DE VERRE

(30) Priorität: 29.02.2016 DE 102016103577
(43) Veröffentlichungstag der Anmeldung: 30.08.2017
(73) Patentinhaber: Deutsche Telekom AG, 53113 Bonn (DE)
(72) Erfinder: HAAG, Thomas, 63110 Rodgau (DE); MEYER, Klaus, 53173 Bonn (DE)
(74) Vertreter: Patentship Patentanwaltsgesellschaft mbH

(56) Entgegenhaltungen:
- WO-A1-2011/070564
- LES BROWN HUAWEI CHINA: "Draft Recommendation ITU-T G.9701 (for Consent, 6 December 2013);TD 159 Rev.1 (PLEN/15)", ITU-T DRAFT ; STUDY PERIOD 2013-2016, INTERNATIONAL TELECOMMUNICATION UNION, GENEVA ; CH, Bd. 4/15, 16. Dezember 2013 (2013-12-16), Seiten 1-288, XP044120758, [gefunden am 2013-12-16]

## Beschreibung

Die vorliegende Erfindung betrifft eine optische Netzwerkentität zum Empfangen eines optischen Signals, mit einer Mehrzahl von Glasfaseranschlussmodulen mit Vorverzerrern zur Kompensation von Kanalübersprechen. Die Erfindung betrifft ferner ein einzelnes Glasfaseranschlussmodul und ein Kommunikationssystem mit einer optischen Netzwerkentität und/oder einem Glasfaseranschlussmodul. Insbesondere betrifft die Erfindung ein Glasfaseranschlussmodul mit zentraler Vectoring-Steuerung.

Nach gegenwärtigem Stand der Technik werden Distribution Point Units (DPU) sowohl an FTTB als auch an FTTdp Standorten eingesetzt. Die Portanzahl variiert zwischen 1 und 16 Ports. Diese Ports können mit G.Fast oder VDSL bestückt sein. Üblicherweise werden in einem Access Knoten, den die DPU darstellt zur Eliminierung der gegenseitigen Portbeeinflussung Vectoring als Verfahren verwendet. G.Fast ist ein ITU-T Standard, der in der Spezifikation. G.9701: "Fast access to user terminals (FAST) - Physical layer specification" näher beschrieben ist.

Das Verfahren ist in unterschiedlichen Ausprägungen definiert: Board Level, System Level, Domain Level. Nach den Standards BBF TR-301 "DPU Architecture and Requirements for Fiber to the Distribution Point" und WT-355 "Data Model for DPU" besteht eine DPU aus den DSL-Schnittstellen, PON-Schnittstellen, der RPF-Funktion (Reverse Power Feeding) sowie Layer 2 Switching Funktionen. In R-12 wird explizit darauf hingewiesen, dass für einen einzelnen Kunden (Single Port DPU) kein Vectoring notwendig ist. Diese Aussage ist solange valide, solange es sich um eine DPU mit einem DSL-Port in einer Leitung handelt.

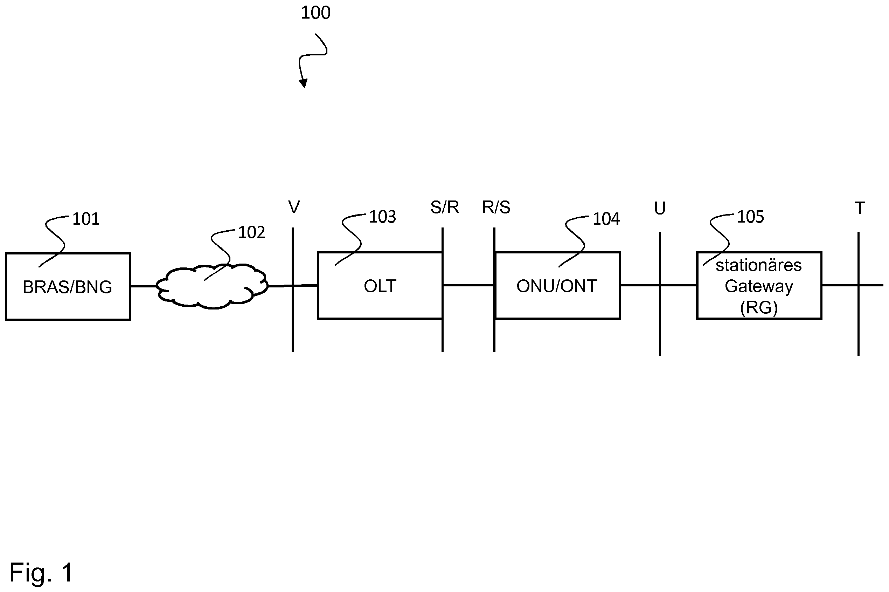

Fig. 1 zeigt eine schematische Darstellung der Topologie eines Breitbandzugangsnetzwerks 100 nach ITU-T G.9701. Eine OLT (optical line termination entity) bzw. optische Leitungsabschlussentität 103 ist über eine im Standard definierte V-Schnittstelle mittels eines Aggregationsnetzwerks 102 an einen BRAS/BNG (Broadband Radio Access System, Border Network Gateway) 101 gekoppelt, um beispielsweise IP Adressen und/oder Zugang zum Aggregationsnetzwerk 102 zu erhalten. Eine ONU/ONT (optical network unit entity, optical network termination entity) bzw. optische Netzwerkentität 104 ist über eine R/S und eine S/R Schnittstelle an die OLT bzw. optische Leitungsabschlussentität 103 gekoppelt. Ein stationäres Gateway (Residential Gateway, RG) ist über eine U-Schnittstelle an die ONU/ONT bzw. optische Netzwerkentität 104 gekoppelt. Auf Teilnehmerseite gibt es die T-Schnittstelle.

Eine Migration von G.Fast zu FTTH ergibt nach heutigem Stand zwei Optionen: Zum einen kompletter Ersatz aller DSL-Ports unter Zwangsmigration aller Kunden zur gleichen Zeit; zum anderen eine portweise Umschaltung unter Beibehaltung ungenutzter Ports. Ferner können heute nicht mehrere DPU an einer Steigleitung betrieben werden, da der Vectoring-Algorithmus nicht zwischen den beteiligten DPU arbeiten kann, da eine Steuerverbindung fehlt. Ein Einsatz von SFUs, die für die Migration in Richtung FTTH richtungsweisend sind, da modular und nur im Bedarfsfall installierbar, ermöglicht nicht den Einsatz von G.Fast und Vectoring/Supervectoring im gleichen Kabel, da die Steuerverbindung zum Steuern der Ports bei Vectoring/Supervectoering oder G.Fast fehlt.

Die Druckschrift WO 2011/070564 A1 betrifft eine Kommunikationsvorrichtung mit dynamischen Spektrum-Managementfähigkeiten in einem Zugangskommunikationsnetz mit zwei Vektormaschinen, die Datenverkehr verarbeiten.

Die Druckschrift "Les Brown Huawei China: Draft Recommendation ITU-T G.9701 (for Consent, 6 December 2013); TD 159 Rev.1 (PLEN/15)", ITU-T Draft; Study period 2013-2016, ITU Geneva; CH, Bd. 4/15, 16. Dezember 2013 betrifft den ITU-T Standard zu G.fast, der den schnellen Internet-Zugang von Geräten beschreibt, die auf der vorhandenen Infrastruktur von Kupferleitungen beruhen.

Es ist die Aufgabe der vorliegenden Erfindung, ein Konzept für eine flexible Migration von G.Fast zu FTTH zu schaffen.

Diese Aufgabe wird durch die Merkmale der unabhängigen Ansprüche gelöst. Vorteilhafte Weiterbildungsformen sind Gegenstand der abhängigen Ansprüche.

Die hier vorgestellte Erfindung löst das Problem der starren DPU-Topologie durch den Einsatz von Single Port Fiber Units (SFU), die eine Einport DPU darstellen und in Verbindung eines Racks eine flexible Anpassung der Portanzahl an den Bedarf sowie in Verbindung mit einem vorgelagerten PON-Splitter eine flexible bedarfsgetriebene Migration der Einzelports von G.Fast/xVDSL (x= VDSL2, Vectoring, SuperVectoring) zu PON ermöglicht. Dies bedeutet, dass SFUs und FTTH aus Sicht von PON jeweils immer nur einen Kundenport abbilden. Das erlaubt eine 1:1 Beziehung zwischen PON - Port und Kundenport ungeachtet, ob es sich um einen PON oder G.Fast/xVDSL- Port handelt. Durch die Anmeldung der SFU an den Vectoring Proxy wird die Aktivierung der Vectoring Funktion auch dann ermöglicht, wenn mehrere SFU innerhalb eines Kabels betrieben werden sollen. Die automatische Erkennung der SFU verbunden mit der Autorisierung am Vectoring Master ermöglicht einen komplett automatisierten Betrieb. Dadurch meldet sich die SFU z.B. über ihren Factory Code (Serien-NR. Barcode etc.) und nach erfolgter Freigabe des Vectoring Proxys findet die Kommunikation zwischen den SFUs ausschließlich über den Proxy statt. Hierdurch wird eine effiziente und schnelle Steuerung ermöglicht, die für das Vectoring-Verfahren wichtig ist.

Die Kommunikation zwischen der SFU und dem Vectoring Proxy sollte über ein geeignetes Medium erfolgen (z.B. drahtgebunden oder drahtlos) und die Steuerung zwischen SFU und Porxy wird beim Einsatz mindestens zwischen 2 SFUs aktiv. Der Proxy im Rack wird von der RPF (Reverse Power Feeding) Funktion der ersten gesteckten SFU gespeist. Eine weitere Leistungsteilung nach dem Stecken weiterer SFUs ist möglich.

Damit ist eine Migration von Gebäuden unterschiedlicher Größe möglich, weil durch den Ansatz die Knotengröße modular erweitert werden kann.

Damit bietet die Erfindung die folgenden Vorteile: Es kann auf eine System Level Vectoring Unit (SLV) an der Lokalität verzichtet werden, da diese Funktion entweder über den Vectoring Proxy oder den Master am OLT-Node Level Vectoring realisiert wird. Es kann auch bei der Nutzung einer SFU ein Fehlerkorrekturverfahren eingesetzt werden um NEXT /FEXT usw. zu beseitigen. Es kann die Rechenleistung im Zugangsnetzwerk (AN) reduziert werden, da nur dort eine Korrektur erfolgt wo auch andere SFUs im Netz aktiv sind. Einzelne Kundenwünsche (FTTB -> FTTH) können sehr flexibel berücksichtigt werden ohne Wechselwirkung zu anderen Kunden. Die Hardware-Kosten der Infrastrukur können deutlich reduziert werden, da weniger oder keine unbeschalteten Ports im Netz vorhanden sind. Einfaches Powermanagement ist möglich, da jeder CPE nur den eigenen SFU versorgt.

Zur Beschreibung der Erfindung werden die folgenden Abkürzungen verwendet:
- BNG:: Broadband Network Gateway bzw. Breitbandnetzwerk-Gateway
- CPE:: Customer Premise Equipment bzw. Teilnehmeranschlusseinheit
- CuDa:: Kupfer Doppelader
- EMS:: Element Management System
- FTTB:: Fiber To The Building bzw. Glasfaser bis zum Gebäude
- FTTH:: Fiber To The Home bzw. Glasfaser bis zum Haus
- OLT:: Optical Line Termination; bzw. Optische Leitungsabschlussentität
- ONT:: Optical Network Termination; bzw. Optischer Netzwerkabschluss
- SFU:: Single Fiber Unit; bzw. Einzel-Glasfasereinheit oder auch Glasfaseranschlussmodul
- SLV:: System Level Vectoring; bzw. Kompensation gegen Kanalübersprechen, insbesondere FEXT und NEXT
- FEXT:: Far End Cross Talk bzw. Übersprechen am fernen Ende
- NEXT:: Near End Cross Talk bzw. Übersprechen am nahen Ende
- RG:: Residential Gateway bzw. stationäres Gateway
- RPF:: Reverse Power Feeding bzw. Rückwärtige Leistungseinspeisung
- Gf:: Glasfaser

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Verfahren und Systeme können zum Kommunizieren in Master-Slave Systemen verwendet werden bzw. auf einer Master-Slave Architektur basieren. Master/Slave (englisch für übergeordnetes/untergeordnetes System) ist eine Form der hierarchischen Verwaltung des Zugriffs auf eine gemeinsame Ressource meist in Form eines gemeinsamen Datenkanals in zahlreichen Problemstellungen der Steuerung und Regelung. Ein Teilnehmer ist der Master, alle anderen sind die Slaves. Der Master hat als einziger das Recht, unaufgefordert auf die gemeinsame Ressource zuzugreifen. Der Slave kann von sich aus nicht auf die gemeinsame Ressource zugreifen; er muss warten, bis er vom Master gefragt wird.

Die im Folgenden vorgestellten Verfahren und Systeme können passive optische Netzwerke (PON), z.B. GPON, XG-PON, NG-PON2, EPON... Netzwerke umfassen. Passive optische Netze, auch als optische Zugangsnetze (OAN) bezeichnet, arbeiten ausschließlich mit passiven optischen Komponenten. PONs bilden die Basis für die hybriden Zugangsnetze (OAN), sie sind in Baumtopologie aufgebaut, direkt mit dem Kernnetz verbunden und haben als Verzweigungen optische Verteilnetze (ODN). Die PON-Technologie gibt es in den verschiedensten Varianten und Implementierungen, so das Broadband Passive Optical Network (BPON), das eine Übertragungsrate von 622 Mbit/s hat. Eine Steigerung auf 1 Gbit/s kann mit dem Ethernet Passive Optical Network (EPON) erreicht werden und mit dem Gigabit-PON (GPON) sogar Übertragungsraten von 2,5 Gbit/s. Mit dem 10-Gigabit-Ethernet PON, 10GEPON, wird der Anschlussbereich für 10-Gigabit-Ethernet geöffnet. Standard-PONs gibt es auch als Next-Generation-Netze, so NG-PON und NG-GPON.

Im PON-Konzept können verschiedene Teilnehmer über eine Glasfaser an eine Anschluss-Vermittlungsstelle angeschlossen werden, an dem verschiedene Dienste, z.B. Sprache, Video, Daten bereitgestellt werden. Die Teilnehmer sind über einen Splitter mit dem optischen Leitungsabschluss (OLT) verbunden. Die zur Verfügung stehende Bandbreite wird unter der Anzahl der möglichen Teilnehmer, beispielsweise 32, aufgeteilt und liegt bei 32:1 oder sogar 64:1. Die Ausdehnung eines solchen passiven optischen Netzes kann ca. 20 km betragen.

Die im Folgenden vorgestellten Verfahren und Systeme können FTTN und FTTC Komponenten umfassen. Als FTTN (englisch Fibre To The Node oder Fibre To The Neighborhood) oder FTTC (engl. Fibre to the Curb 'Faser an den Randstein'; in die Nähe des Teilnehmers) bezeichnet man das Verlegen von Glasfaserkabeln bis zum nächsten Verteiler, dem Kabelverzweiger. Hier werden also entsprechend die sogenannten Hauptkabel von Kupfer auf Glasfaser hochgerüstet bzw. durch Glasfaserkabel ergänzt. Die FTTN-Technik ist wie alle anderen FTTL-Techniken eine Glasfaseranschlusstechnik, bei der die Glasfaser im Anschlussbereich zwischen Ortsvermittlungsstelle und dem Schaltverteiler geführt wird. Dort erfolgt über die Optical Network Unit (ONU) eine Signalumsetzung und die weitere Übertragung zum Teilnehmeranschluss über Kupferkabel. Die überbrückbare Entfernung liegt bei ca. 500 m; die Datenrate liegt im Upstream zwischen 2 Mbit/s und 12 Mbit/s und im Downstream zwischen 25 Mbit/s und 52 Mbit/s.

Gemäß einem ersten Aspekt betrifft die Erfindung eine optische Netzwerkentität zum Empfangen eines optischen Signals, mit: einer Mehrzahl von Glasfaseranschlussmodulen zur Umsetzung einer Mehrzahl von optischen Signalen in elektrische Signale; und einem Steuerungsmodul, wobei jedes Glasfaseranschlussmodul einen Vorverzerrer zum Vorverzerren des elektrischen Signals aufweist, um ein Kanalübersprechen zu kompensieren, wobei jedes Glasfaseranschlussmodul mit der optischen Netzwerkentität über elektrische Kontakte verbindbar ist, wobei das Steuerungsmodul ausgebildet ist, ansprechend auf eine elektrische Verbindung eines Glasfaseranschlussmoduls mit der optischen Netzwerkentität das Glasfaseranschlussmodul zu detektieren und dem detektierten Glasfaseranschlussmodul Vorverzerrungskoeffizienten zu übermitteln, und wobei der Vorverzerrer ausgebildet ist, das elektrische Signal mittels der übermittelten Vorverzerrungskoeffizienten vorzuverzerren.

Dies bringt den Vorteil, dass die Kompensation gegen Kanalübersprechen flexibel erfolgen kann, je nachdem wie viele Glasfaseranschlussmodule gerade in der optischen Netzwerkentität aktiv sind. Beim Aktivieren eines Glasfaseranschlussmoduls, beispielsweise durch Einschalten der Stromversorgung oder Einstecken in ein Rack wird das jeweilige Glasfaseranschlussmodul detektiert und die Vorverzerrung durch das Steuerungsmodul entsprechend angepasst, um ein Übersprechen durch FEXT, NEXT zu berücksichtigen, das aufgrund des gerade aktivierten Glasfaseranschlussmoduls bewirkt wird. Damit können flexibel Glasfaseranschlussmodule zu- und weggeschaltet werden ohne dass damit das gesamte System gestört wird. Ein Zuschalten beispielsweise durch einen neuen Teilnehmer, ein Abschalten beispielsweise durch Portierung einer Teilnehmerverbindung von elektrisch auf optisch (FTTB oder FTTH). Somit wird eine flexible Migration von G.Fast/xVDSL zu FTTH möglich.

In einer Ausführungsform der optischen Netzwerkentität ist der Vorverzerrer ausgebildet, das elektrische Signal gegen ein Nahendübersprechen (NEXT) und/oder ein Fernendübersprechen (FEXT) zu kompensieren.

Dies bringt den Vorteil, dass das Steuerungsmodul Verzerrerkoeffizienten liefern kann, die wirksam eine Kompensation gegen NEXT und FEXT bewirken. Das Gesamtsystem wird damit nicht negativ beeinflusst, wenn ein Teilnehmer am System umarrangiert wird, z.B. durch Migration von G.Fast zu FTTH.

In einer Ausführungsform der optischen Netzwerkentität ist das Steuerungsmodul ausgebildet, die Vorverzerrungskoeffizienten abhängig von einer Anzahl detektierter Glasfaseranschlussmodul zu berechnen.

Dies bringt den Vorteil, dass das Steuerungsmodul für die Vorverzerrung die elektrischen (Übersprech-) Signale sämtlicher aktiver Glasfaseranschlussmodule berücksichtigen kann, um damit eine optimale Vorverzerrung für alle elektrischen Signale zu erhalten.

In einer Ausführungsform der optischen Netzwerkentität weist das Steuerungsmodul eine Schnittstelle zu einer optischen Leitungsabschlussentität auf, die ausgebildet ist, eine Nachricht über das detektierte Glasfaseranschlussmodul an die optische Leitungsabschlussentität zu übermitteln und von der optischen Leitungsabschlussentität die Vorverzerrungskoeffizienten zu empfangen.

Dies bringt den Vorteil, dass das Steuerungsmodul die Vorverzerrungskoeffizienten nicht selbst bestimmen muss, sondern dass diese in der optischen Leitungsabschlussentität bestimmt werden können und über die Schnittstelle zum Steuerungsmodul übertragen werden können. Damit kann das Steuerungsmodul schlank ausgelegt werden und Rechenkapazität zur Ermittlung der Vorverzerrerkoeffizienten kann statt in der optischen Netzwerkentität (im Steuerungsmodul) in der optischen Leitungsabschlussentität vorgehalten werden.

In einer Ausführungsform der optischen Netzwerkentität umfasst die Nachricht eine Identifikation des detektierten Glasfaseranschlussmoduls.

Dies bringt den Vorteil, dass über die Nachricht das aktivierte Glasfaseranschlussmodul der optischen Leitungsabschlussentität mitgeteilt werden kann, so dass diese das Glasfaseranschlussmodul authentifizieren kann. Ferner hat die optische Leitungsabschlussentität damit einen genauen Überblick über die im System gerade aktiven Komponenten und den gesamten Zustand des Systems.

In einer Ausführungsform weist die optische Netzwerkentität ferner einen optischen Splitter auf, der ausgebildet ist, das optische Signal zu empfangen und in die Mehrzahl von optischen Signalen aufzuspalten.

Dies bringt den Vorteil, dass das optische Signal von der optischen Leitungsabschlussentität auf die einzelnen Glasfaseranschlussmodule verteilt werden kann, so dass nur ein optisches Signal zur optischen Netzwerkentität übertragen werden braucht. Der Splitter kann beispielsweise als PON Splitter ausgeführt werden, so dass die optische Netzwerkentität optische Signale aus PON-Netzen verarbeiten kann und in elektrische Signale umwandeln kann.

In einer Ausführungsform weist die optische Netzwerkentität ferner ein Rack auf, in das die jeweiligen Glasfaseranschlussmodule einsteckbar sind, und das Steuerungsmodul ist ausgebildet, ansprechend auf ein Einstecken eines jeweiligen Glasfaseranschlussmoduls in das Rack das jeweilige Glasfaseranschlussmodul zu detektieren.

Dies bringt den Vorteil, dass die optische Netzwerkentität kompakt aufgebaut sein kann und sich dafür eignet beim Teilnehmer aufgestellt zu werden, beispielsweise in einem Mehrfamilienhaus mit einer Glasfaseranschlussleitung, aus welcher die optische Netzwerkentität dann für alle Haushalte im Haus die entsprechenden elektrischen und/oder wahlweise optischen Signal erzeugt, um die Haushalte des Mehrfamilienhauses an das Internet anzubinden.

In einer Ausführungsform der optischen Netzwerkentität weist jedes Glasfaseranschlussmodul einen teilnehmerseitigen Port auf, der ausgelegt ist, das entsprechende elektrische Signal zu einem Teilnehmeranschluss zu übermitteln; und jedes Glasfaseranschlussmodul wird über den teilnehmerseitigen Port mit Strom versorgt, sobald das Glasfaseranschlussmodul in das Rack gesteckt ist und mit dem kundenseitigen Anschluss verbunden und von diesem gespeist wird.

Dies bringt den Vorteil, dass das Glasfaseranschlussmodul keine eigene Stromversorgung benötigt und damit kompakt ausgeführt sein kann. Über den teilnehmerseitigen Port können zugleich Daten an den Teilnehmer übermittelt werden und das Glasfaseranschlussmodul mit Strom versorgt werden.

In einer Ausführungsform weist die optische Netzwerkentität ferner ein Leistungssteuerungsmodul auf, das elektrisch mit den jeweiligen Glasfaseranschlussmodulen koppelbar ist, und ausgebildet ist, das Rack und das Steuerungsmodul über zumindest eines der in das Rack gesteckten Glasfaseranschlussmodule mit Strom zu versorgen.

Dies bringt den Vorteil, dass das Rack mit Glasfaseranschlussmodulen keine eigene Stromversorgung benötigt und damit kompakt ausgeführt sein kann. Sämtliche Komponenten des Racks können über die elektrische Leitung bzw. Kupferleitung direkt vom Teilnehmeranschluss, z.B. dem Teilnehmer G.fast/xVDSL Modem oder dem Heim-Gateway, elektrisch gespeist werden. Die entsprechende Steuerung hierzu kann das Steuerungsmodul vornehmen, beispielsweise über RPF (Reverse Power Feeding). Natürlich kann das Steuerungsmodul das Rack auch auf eine andere Art als über RPF mit Strom versorgen, beispielsweise durch eine im Rack oder in den einzelnen Glasfaseranschlussmodulen eingebaute Stromversorgung.

Gemäß einem zweiten Aspekt betrifft die Erfindung ein Glasfaseranschlussmodul zur Umsetzung eines optischen Signals in ein elektrisches Signal, mit: einem optischen Anschluss zum Empfangen des optischen Signals; einem Prozessor, der ausgebildet ist, das empfangene optische Signal in ein elektrisches Signal umzusetzen; einem Vorverzerrer, der ausgebildet ist, das elektrische Signal vorzuverzerren, um ein Kanalübersprechen zu kompensieren; und einer Schnittstelle zu einem Steuerungsmodul, die ausgelegt ist, dem Vorverzerrer Vorverzerrungskoeffizienten zu übermitteln, und der Vorverzerrer ist ausgebildet, das elektrische Signal mittels der übermittelten Vorverzerrungskoeffizienten vorzuverzerren.

Dies bringt den Vorteil, dass die Kompensation gegen Kanalübersprechen flexibel erfolgen kann, je nachdem wo das Glasfaseranschlussmodul gerade eingesetzt wird. Beim Aktivieren des Glasfaseranschlussmoduls, beispielsweise durch Einschalten der Stromversorgung wird das Glasfaseranschlussmodul detektiert und die Vorverzerrung entsprechend angepasst, um ein Übersprechen durch FEXT, NEXT zu berücksichtigen, das auf der elektrischen Leitung auftreten kann. Damit kann das Glasfaseranschlussmodul flexibel zu einem Verbund mit anderen Glasfaseranschlussmodulen zu- und weggeschaltet werden ohne dass damit der Verbund gestört wird. Das Glasfaseranschlussmodul kann flexibel jedem Einzelteilnehmer zugeordnet werden, der beispielsweise aus einem bisherigen Anschlusssystem im Verbund mit anderen Teilnehmern zu einem Einzelanschluss wechseln möchte. Somit wird eine flexible Migration von G.Fast/xVDSL zu FTTH möglich.

In einer Ausführungsform des Glasfaseranschlussmoduls umfasst der optische Anschluss ein PON Backhaul Modul.

Dies bringt den Vorteil, dass das Glasfaseranschlussmodul optische Signale aus PON-Netzen verarbeiten kann und in elektrische Signale umwandeln kann. Das individuelle Glasfaseranschlussmodul kann damit effizient und kostengünstig an ein PON Netz angekoppelt werden.

In einer Ausführungsform des Glasfaseranschlussmoduls ist der Prozessor ausgelegt, das elektrische Signal gemäß einem G.Fast oder xVDSL Protokoll aus dem optischen Signal zu erzeugen.

Dies bringt den Vorteil, dass die bisher üblichen G.Fast und xVDSL Protokolle, die auf elektrischen Anschlussleitungen basieren, durch das Glasfaseranschlussmodul unterstützt werden.

In einer Ausführungsform des Glasfaseranschlussmoduls ist die Schnittstelle zu dem Steuerungsmodul ferner ausgelegt, dem Steuerungsmodul eine Identifikation des Glasfaseranschlussmoduls zu übermitteln.

Dies bringt den Vorteil, dass die Identifikation des Glasfaseranschlussmoduls der optischen Leitungsabschlussentität mitgeteilt werden kann, so dass diese das Glasfaseranschlussmodul authentifizieren kann. Ferner hat die optische Leitungsabschlussentität damit einen genauen Überblick über die im System gerade aktiven Komponenten und den gesamten Zustand des Systems.

Gemäß einem dritten Aspekt betrifft die Erfindung ein Kommunikationssystem, mit: einer optischen Leitungsabschlussentität zum Bereitstellen eines optischen Signals; einer optischen Netzwerkentität gemäß dem ersten Aspekt oder einer seiner Ausführungsformen zum Umsetzen des optischen Signals in ein elektrisches Signal; und/oder ein Glasfaseranschlussmodul gemäß dem zweiten Aspekt oder einer seiner Ausführungsformen zum Umsetzen des optischen Signals in ein elektrisches Signal, wobei die optische Leitungsabschlussentität ausgelegt ist, dem Glasfaseranschlussmodul Vorverzerrungskoeffizienten zu übermitteln.

Dies bringt den Vorteil, dass die Kompensation gegen Kanalübersprechen flexibel erfolgen kann, je nachdem wie viele Glasfaseranschlussmodule gerade im Kommunikationssystem aktiv sind. Das Kommunikationssystem hat stets einen Überblick über die optischen Netzwerkentitäten und einzelnen Glasfaseranschlussmodule und kann die Kompensation gegen Kanalübersprechen damit optimal bestimmen. Optische Netzwerkentitäten und Glasfaseranschlussmodule können flexibel zu- und weggeschaltet werden ohne dass damit das gesamte System gestört wird. Ein Zuschalten beispielsweise durch einen neuen Teilnehmer, ein Abschalten beispielsweise durch Portierung einer Teilnehmerverbindung von elektrisch auf optisch (FTTB oder FTTH). Somit wird eine flexible Migration von G.Fast zu FTTH möglich.

In einer Ausführungsform des Kommunikationssystems ist die optische Leitungsabschlussentität ausgelegt, eine Identifikation des Glasfaseranschlussmoduls zu detektieren und die Vorverzerrungskoeffizienten abhängig von der Identifikation des Glasfaseranschlussmoduls zu übermitteln.

Dies bringt den Vorteil, dass die Identifikation des Glasfaseranschlussmoduls der optischen Leitungsabschlussentität mitgeteilt werden kann, so dass diese das Glasfaseranschlussmodul authentifizieren kann und die optimalen Vorverzerrerkoeffizienten dem jeweiligen Glasfaseranschlussmodul zuweisen kann. Ferner hat die optische Leitungsabschlussentität damit einen genauen Überblick über die im System gerade aktiven Komponenten und den gesamten Zustand des Systems.

Weitere Ausführungsbeispiele werden Bezug nehmend auf die beiliegenden Zeichnungen erläutert. Es zeigen:
Fig. 1 eine schematische Darstellung der Topologie eines Breitbandzugangsnetzwerks 100;
Fig. 2 eine schematische Darstellung eines Breitbandzugangsnetzwerks 200 mit in einem Rack untergebrachter optischer Netzwerkentität 301 gemäß einer Ausführungsform;
Fig. 3 eine schematische Darstellung des Breitbandzugangsnetzwerks 200 aus Figur 2 mit Detail-Darstellung der optischer Netzwerkentität 301 gemäß einer Ausführungsform;
Fig. 4 eine schematische Darstellung der Nachrichtensequenzen 400 in dem Breitbandzugangsnetzwerks 200 aus Figur 2 gemäß einer ersten Ausführungsform;
Fig. 5 eine schematische Darstellung der Nachrichtensequenzen 500 in dem Breitbandzugangsnetzwerks 200 aus Figur 2 gemäß einer zweiten Ausführungsform; und
Fig. 6 eine schematische Darstellung der Nachrichtensequenzen 600 in einem Breitbandzugangsnetzwerk 200 mit einem einzelnen Glasfaseranschlussmodul 310 gemäß einer Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

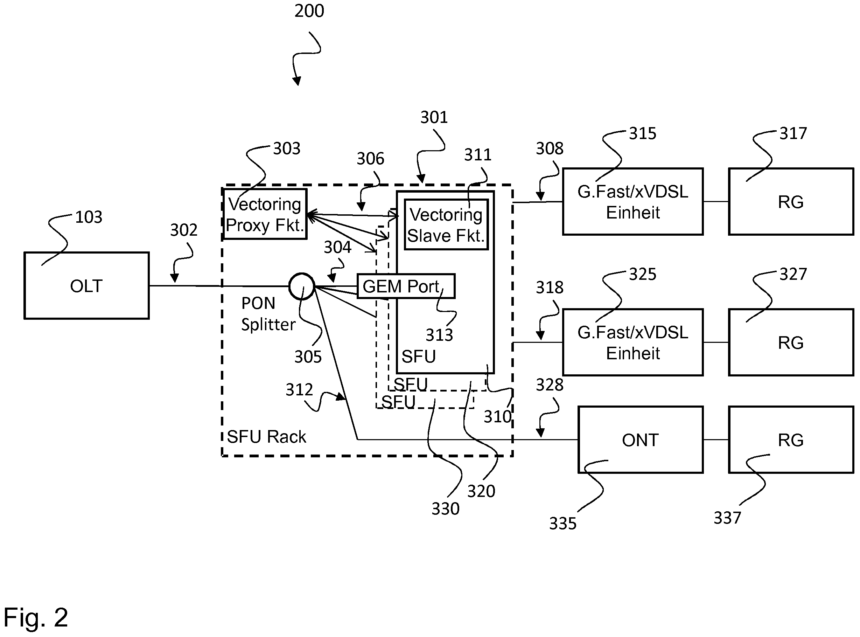

Fig. 2 zeigt eine schematische Darstellung eines Breitbandzugangsnetzwerks 200 mit in einem Rack untergebrachter optischer Netzwerkentität 301 zum Empfangen eines optischen Signals 302 gemäß einer Ausführungsform.

Die optische Netzwerkentität umfasst einer Mehrzahl von Glasfaseranschlussmodulen 310, 320, 330, ein Steuerungsmodul 303 und einen optische Splitter 305. Der optische Splitter 305 ist dazu ausgelegt, das optische Signal 302 zu empfangen und in eine Mehrzahl von optischen Signalen 304 aufzuspalten, die über optische Verzweigungsleitungen zu den Glasfaseranschlussmodulen 310, 320, 330 geführt werden. Der optische Splitter ist beispielsweise ein passiver optischer Splitter, z.B. ein PON (Passives Optisches Netzwerk) Splitter.

Die Glasfaseranschlussmodule 310, 320, 330 sind dazu ausgelegt, die Mehrzahl von optischen Signalen 304 in elektrische Signale 308, 318 umzusetzen, wobei jedes Glasfaseranschlussmodul 310, 320, 330 ein entsprechendes elektrisches Signal 308, 318 erzeugen kann. Jedes Glasfaseranschlussmodul 310, 320, 330 weist einen Vorverzerrer 311 zum Vorverzerren des jeweiligen elektrischen Signals 308, 318 auf, um ein Kanalübersprechen zu kompensieren. Jedes Glasfaseranschlussmodul 310, 320, 330 ist mit der optischen Netzwerkentität 301 elektrisch lösbar verbindbar.

Das Steuerungsmodul 303 ist dazu ausgebildet, ansprechend auf eine elektrische Verbindung eines Glasfaseranschlussmoduls 310, 320, 330 mit der optischen Netzwerkentität 301 das Glasfaseranschlussmodul 310, 320, 330 zu detektieren und dem detektierten Glasfaseranschlussmodul 310, 320, 330 Vorverzerrungskoeffizienten 306 zu übermitteln. Der Vorverzerrer 311 ist dazu ausgebildet, das jeweilige elektrische Signal 308, 318 mittels der übermittelten Vorverzerrungskoeffizienten 306 vorzuverzerren.

Der Vorverzerrer 311 kann das elektrische Signal 308, 318 beispielsweise gegen ein Nahendübersprechen (NEXT) und/oder ein Fernendübersprechen (FEXT) kompensieren.

Das Steuerungsmodul 303 kann die Vorverzerrungskoeffizienten 306 abhängig von einer Anzahl detektierter Glasfaseranschlussmodule 310, 320, 330 berechnen. Je nachdem, wieviel Glasfaseranschlussmodule 310, 320, 330 elektrische Signale aussenden, ändert sich die Störung auf der elektrischen Leitung, so dass die Vorverzerrungskoeffizienten entsprechend geändert werden sollten.

Die optische Netzwerkentität 301 kann ein Rack aufweisen, in das die jeweiligen Glasfaseranschlussmodule 310, 320, 330 einsteckbar sind. Das Steuerungsmodul 303 kann ansprechend auf ein Einstecken eines jeweiligen Glasfaseranschlussmoduls 310, 320, 330 in das Rack das jeweilige Glasfaseranschlussmodul 310, 320, 330 detektieren.

Jedes Glasfaseranschlussmodul 310, 320, 330 kann einen teilnehmerseitigen Port aufweisen, um das entsprechende elektrische Signal 308, 318 zu einem Teilnehmeranschluss 315, 325 zu übermitteln. Jedes Glasfaseranschlussmodul 310, 320, 330 kann über den teilnehmerseitigen Port mit Strom versorgt werden, sobald das Glasfaseranschlussmodul 310, 320, 330 in das Rack gesteckt ist.

Im Folgenden wird eine beispielhafte Implementierung des Breitbandzugangsnetzwerks 200 dargestellt. Die einzelnen SFU-Module 310, 320, 330 sind in einem Rack 301 untergebracht. Das Rack 301 beinhaltet neben der mechanischen Aufnahme der SFU-Module auch noch die elektrische Kontaktierung zur SFU und auch noch die Vectoring Proxy Funktion, die der Anmeldung der SFU-Module am Rack sowie die Steuerung der SFUs untereinander sowie die Steuerung über die Vectoring Master-Funktion durchführt. Am Rack selbst befindet sich ein Splitter 305, der einen flexiblen Wechsel zwischen den G.Fast SFU 310, 320, 330 und FTTH ONT 312 ermöglicht.

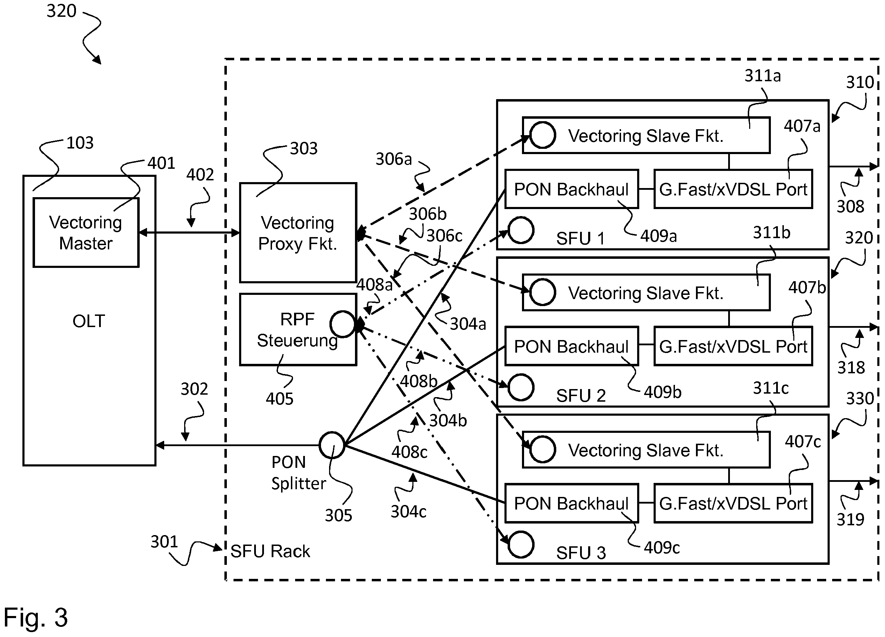

Der Splitter 305 ist optisch mit dem OLT 103 verbunden und stellt die Verbindung zum PON-baum 304 her. Aus Sicht des OLT verhält sich die SFU durch den eingebauten ONT mit der PON Backhaulfunktion 409a, 409b, 409c (siehe Figur 3) wie ein FTTH-Anschluss, so dass beim Wechsel von FTTB 308 zu FTTH 328 nur ein Umstecken am Splitter notwendig ist. Die Anmeldeprozedur am PON erfolgt über OMCI Standardfunktionen.

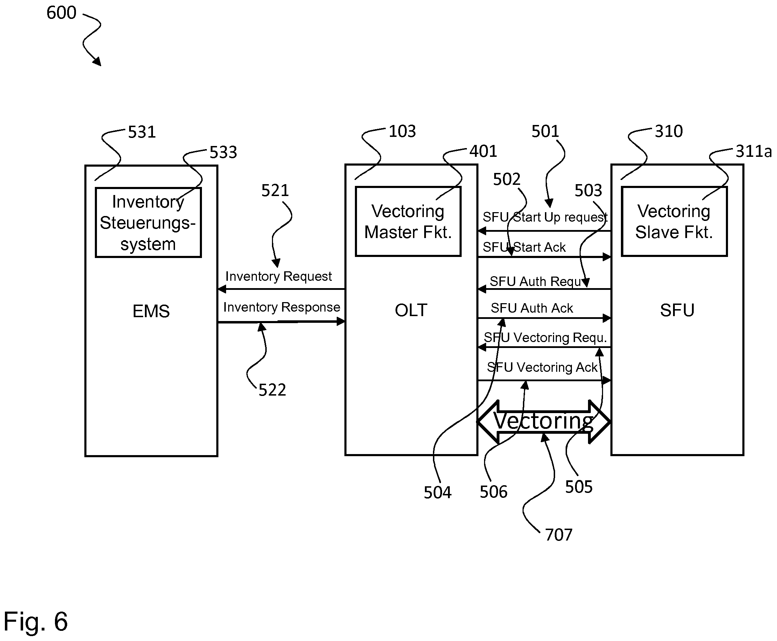

Alternativ kann auch eine Realisierung ohne Rack erfolgen (siehe Fig. 6) indem die Vectoring Proxy Funktion entfällt und die Vectoring Slave Funktion der SFU direkt mit der Vectoring Master Funktion im OLT kommuniziert. Dabei erkennt die Master Vectoring-Funktion die SFU automatisch oder hat diese Information bereits aus der PON Topologie vorliegen.

Fig. 3 zeigt eine schematische Darstellung des Breitbandzugangsnetzwerks 200 aus Figur 2 mit Detail-Darstellung der optischen Netzwerkentität 301 gemäß einer Ausführungsform.

Das Steuerungsmodul 303 kann eine Schnittstelle 402 zu einer optischen Leitungsabschlussentität 103 aufweisen, um eine Nachricht über das detektierte Glasfaseranschlussmodul 310, 320, 330 an die optische Leitungsabschlussentität 103 zu übermitteln und von der optischen Leitungsabschlussentität 103 die Vorverzerrungskoeffizienten 306 zu empfangen. Die Nachricht kann beispielsweise eine Identifikation des detektierten Glasfaseranschlussmoduls 310, 320, 330 umfassen.

Die optische Netzwerkentität 301 kann ferner ein Leistungssteuerungsmodul 405 aufweisen, das elektrisch mit den jeweiligen Glasfaseranschlussmodulen 310, 320, 330 koppelbar ist, und das Rack und das Steuerungsmodul 303 über zumindest eines der in das Rack gesteckten Glasfaseranschlussmodule 310, 320, 330 mit Strom versorgen kann. Das Leistungssteuerungsmodul 405 kann über eine oder mehrere der elektrischen Leitungen 408a, 408b, 408c zu den entsprechenden Glasfaseranschlussmodule 310, 320, 330 mit Strom versorgt werden. Bei in das Rack gestecktem Glasfaseranschlussmodul 310, 320, 330 kann das Glasfaseranschlussmodul 310, 320, 330 das Rack über den Teilnehmeranschluss mit Strom versorgen.

Der optische Splitter 305 spaltet das empfangene optische Signal 302 in die Mehrzahl von optischen Signalen 304a, 304b, 304c auf, die an die jeweiligen optischen Ports 409a, 409b, 409c der entsprechenden Glasfaseranschlussmodule 310, 320, 330 weitergeleitet werden.

Das Steuerungsmodul 303 ist über entsprechende elektrische Leitungen 306a, 306b, 306c mit den jeweiligen Vorverzerrern 311a, 311b, 311c verbunden, um die Vorverzerrerkoeffizienten zu übertragen.

Die Glasfaseranschlussmodule 310, 320, 330 können auch ohne Rack betrieben werden.

Das Glasfaseranschlussmodul 310, das der Umsetzung eines optischen Signals 304a in ein elektrisches Signal 308 dient, umfasst einen optischen Anschluss 409a zum Empfangen des optischen Signals 304a; einen Prozessor 407a, der ausgebildet ist, das empfangene optische Signal 304a in ein elektrisches Signal 308 umzusetzen; einen Vorverzerrer 311a, der ausgebildet ist, das elektrische Signal 308 vorzuverzerren, um ein Kanalübersprechen zu kompensieren; und eine Schnittstelle zu einem Steuerungsmodul, beispielsweise einem Steuerungsmodul 303 in der optischen Netzwerkentität 301 oder einem Steuerungsmodul 401 in der optischen Leitungsabschlussentität. Die Schnittstelle ist ausgelegt, dem Vorverzerrer 311a Vorverzerrungskoeffizienten 306a zu übermitteln.

Der Vorverzerrer 311a ist dazu ausgebildet, das elektrische Signal 308 mittels der übermittelten Vorverzerrungskoeffizienten 306a vorzuverzerren.

Der optische Anschluss 409a kann beispielsweise ein PON Backhaul Modul umfassen. Der Prozessor 407a kann dazu ausgelegt sein, das elektrische Signal 308 gemäß einem G.Fast oder xVDSL Protokoll aus dem optischen Signal 304a zu erzeugen. Die Schnittstelle zu dem Steuerungsmodul 303, 401 kann ferner dazu ausgelegt sein, dem Steuerungsmodul 303, 401 eine Identifikation des Glasfaseranschlussmoduls 310 zu übermitteln.

Das Breitbandzugangsnetzwerk 200 bildet ein Kommunikationssystem 200 mit einer optischen Leitungsabschlussentität 103 zum Bereitstellen eines optischen Signals 302; einer optischen Netzwerkentität 301 zum Umsetzen des optischen Signals in ein elektrisches Signal; und/oder einem Glasfaseranschlussmodul 310 zum Umsetzen des optischen Signals in ein elektrisches Signal, wobei die optische Leitungsabschlussentität 103 dafür ausgelegt ist, dem Glasfaseranschlussmodul 310 Vorverzerrungskoeffizienten 306 zu übermitteln.

Die optische Leitungsabschlussentität 103 kann dafür ausgelegt sein, eine Identifikation des Glasfaseranschlussmoduls 310 zu detektieren und die Vorverzerrungskoeffizienten 306 abhängig von der Identifikation des Glasfaseranschlussmoduls 310 zu übermitteln.

Jede SFU besteht aus den Hauptmodulen PON Backhaul Funktion (12), der G.Fast/xVDSL Port Funktion (13) sowie der Vectoring Slave Funktion (11). Sobald das SFU-Modul in das SFU-Rack geschoben wird, verbindet sich die SFU optisch und elektrisch mit dem Rack. Da jedes SFU-Modul über (3) mit Strom versorgt wird (RPF) arbeitet es autark und benötigt keine zentrale Stromversorgung. Das Rack selbst benötigt auch keine lokale Stromversorgung, da es über die RPF-Control (10) mit Strom von den SFU 1..n mit Strom versorgt wird, sobald mindestens eine SFU elektrischen Kontakt (9) mit der RPF Control hat. Außerdem erhält die Vectoring Slave Funktion (11) Kontakt (8) mit der Vectoring Proxy Funktion (14). Diese Funktion kann die SFU Anmeldung entgegennehmen und lokal verarbeiten, wenn die anzumeldende SFU bekannt ist, oder sie leitet diese Information (15) an die Vectoring Master Funktion weiter, die die Anmeldung am System durchführt.

Im Folgenden wird eine beispielhafte Implementierung des Breitbandzugangsnetzwerks 200 dargestellt. Jede SFU 310, 320, 330 besteht aus den Hauptmodulen PON Backhaul Funktion 409a, 409b, 409c, der G.Fast/xVDSL Port Funktion 407a, 407b, 407c sowie der Vectoring Slave Funktion 311a, 311b, 311c. Sobald das SFU-Modul 310, 320, 330 in das SFU-Rack 301 geschoben wird, verbindet sich die SFU optisch und elektrisch mit dem Rack. Da jedes SFU-Modul über die Anschlussleitungen 308, 318 mit Strom versorgt wird (RPF) arbeitet es autark und benötigt keine zentrale Stromversorgung. Das Rack selbst benötigt auch keine lokale Stromversorgung, da es über die RPF-Control 405 von den SFUs 310, 320, 330 mit Strom versorgt wird, sobald mindestens eine SFU elektrischen Kontakt 408a, 408b, 408c mit der RPF Control hat. Außerdem erhält die Vectoring Slave Funktion 311a, 311b, 311c Kontakt 306a, 306b, 306c mit der Vectoring Proxy Funktion 303. Diese Funktion kann die SFU Anmeldung entgegennehmen und lokal verarbeiten, wenn die anzumeldende SFU bekannt ist, oder sie leitet diese Information 402 an die Vectoring Master Funktion 401 weiter, die die Anmeldung am System durchführt.

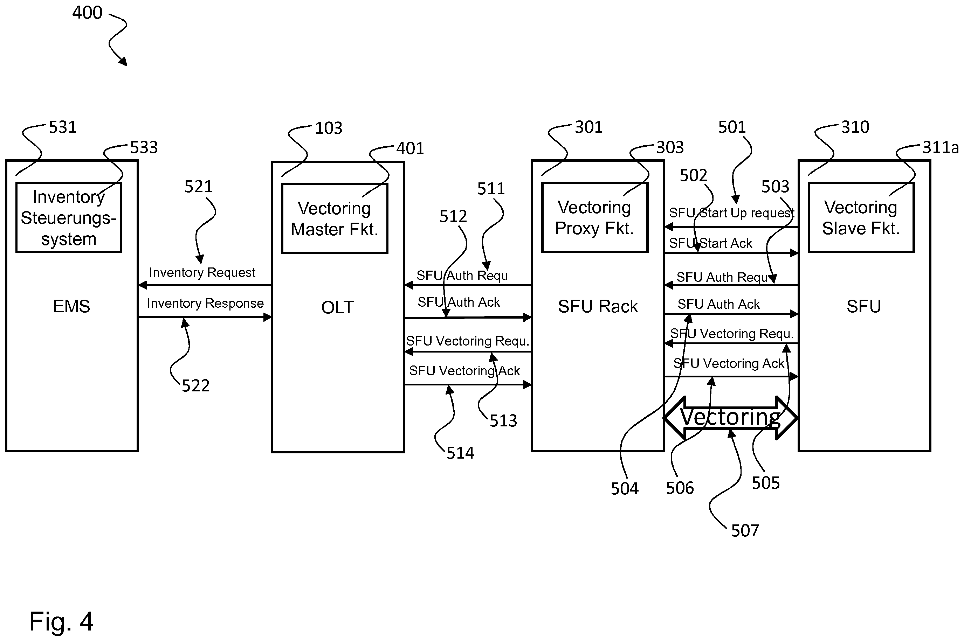

Fig. 4 zeigt eine schematische Darstellung der Nachrichtensequenzen 400 in dem Breitbandzugangsnetzwerks 200 aus Figur 2 gemäß einer ersten Ausführungsform.

Nach dem Stecken des Glasfaseranschlussmoduls 310 in die optische Netzwerkentität 301, bzw. in das Rack, können die im Folgenden beschriebenen Nachrichten ausgetauscht werden. Das Glasfaseranschlussmodul 310 sendet eine Nachricht "SFU Start Up request" 501 an die optische Netzwerkentität 301 bzw. das Rack, welche durch eine Nachricht "SFU Start Ack" 502 beantwortet wird. Das Glasfaseranschlussmodul 310 ist damit im Rack gesteckt und betriebsbereit. Danach sendet das Glasfaseranschlussmodul 310 eine Nachricht "SFU Auth request" 503 an die optische Netzwerkentität 301 bzw. das Rack, welche durch eine Nachricht "SFU Auth Ack" 504 beantwortet wird. Das Glasfaseranschlussmodul 310 ist damit authentifiziert. Danach sendet das Glasfaseranschlussmodul 310 eine Nachricht "SFU Vectoring request" 505 an die optische Netzwerkentität 301 bzw. das Rack, welche durch eine Nachricht "SFU Vectoring Ack" 506 beantwortet wird. Das Glasfaseranschlussmodul 310 ist damit im Vectoring-Verfahren, d.h. Kompensationsverfahren gegen Kanalübersprechen berücksichtigt und die Verzerrerkoeffizienten entsprechend angepasst.

Nach Empfang der Nachricht "SFU Auth request" 503 sendet die optische Netzwerkentität 301 seinerseits die Nachricht "SFU Auth request" 511 weiter an die Leitungsabschlussentität 103, welche darauf antwortet mit der Nachricht "SFU Auth Ack" 512, falls dem Glasfaseranschlussmodul 310 die Authentifizierung gewährt wird. In gleicher Weise sendet die optische Netzwerkentität 301 nach Empfang der Nachricht "SFU Vectoring request" 505 seinerseits die Nachricht "SFU Vectoring request" 513 weiter an die Leitungsabschlussentität 103, welche darauf antwortet mit der Nachricht "SFU Vectoring Ack" 514, falls dem Glasfaseranschlussmodul 310 Zugang zur Vorverzerrungskompensation bzw. dem Vectoring-Verfahren gewährt wird.

Nach Empfang der Nachricht "SFU Auth request" 511 sendet die Leitungsabschlussentität 103 die Nachricht "Inventory Request" 521 weiter an das Elementenmanagementsystem 531, welches in seinem Steuerungsmodul 533 überprüft, ob das Glasfaseranschlussmodul 310 zum Zugang berechtigt ist, und bei positiver Prüfung darauf antwortet mit der Nachricht "Inventory Response" 522. In Antwort auf die Nachricht "Inventory Response" 522 wird die Nachricht "SFU Auth Ack" 512 in der Leitungsabschlussentität 103 erzeugt und in Antwort darauf die Nachricht "SFU Auth Ack" 504 in der optischen Netzwerkentität 301.

Nach positivem Abschluss der oben beschriebenen Nachrichtensequenzen wird das Vectoring-Verfahren 507 zwischen der optischen Netzwerkentität 301 und dem Glasfaseranschlussmodul 310 initialisiert.

Im Folgenden wird eine beispielhafte Implementierung der Nachrichtensequenz 400 dargestellt. Sobald die SFU 310, 320, 330 elektrischen Kontakt zum SFU Rack 301 hat und die Vectoring Proxy Funktion 303 über die RPF Control 405 speist, beginnt die SFU Vectoring Slave Funktion 311a, 311b, 311c ein "SFU Start Up request" 501 zur Vectoring Proxy Funktion 303 zu senden, welches die Vectoring Proxy Funktion 303 immer mit einem SFU Start Acknowledge 502 quittiert. Daraufhin beginnt die Vectoring Slave Funktion 311a, 311b, 311c ein SFU Authentication Request 503 zur Vectoring Proxy Funktion 303 zu senden, die diese Anfrage ggf. prüft und an die Vectoring Master Funktion 401 weiterleitet. Diese setzt diese Nachricht in ein Inventory Request 521 um, und fragt am Inventory Steuerungssystem 533 des EMS 531 nach, ob die SFU bekannt ist. Die Inventory Daten der anzumeldenden SFU sollten zuvor dem Inventory Control System 531 per Konfiguration oder per BarCode Scan und mobiler Übermittlung mitgeteilt worden sein. Ist die SFU bekannt, wird die Authentifizierung durch Quittierungnachrichten 522, 512, 504 der Vectoring Slave Funktion 311a, 311b, 311c mitgeteilt. Sobald die SFU erfolgreich authentifiziert ist, startet sie mit der Vectoring Proxy Funktion 303 das Vectoring 507.

Je nach Ausprägung des Vectoring unterscheidet man zwischen System Level Vectoring (SLV) und Board Level Vectoring (BLV). Da es sich beim Vectoring um den Austausch von Steuerinformation zwischen eigenständigen SFUs handelt wird hier das Prinzip des System Level Vectorings angewandt. Dabei kann SLV entweder zwischen SFU 310, 320, 330 und SFU Rack 301 oder SFU 310, 320, 330 und OLT 103 erfolgen 607.

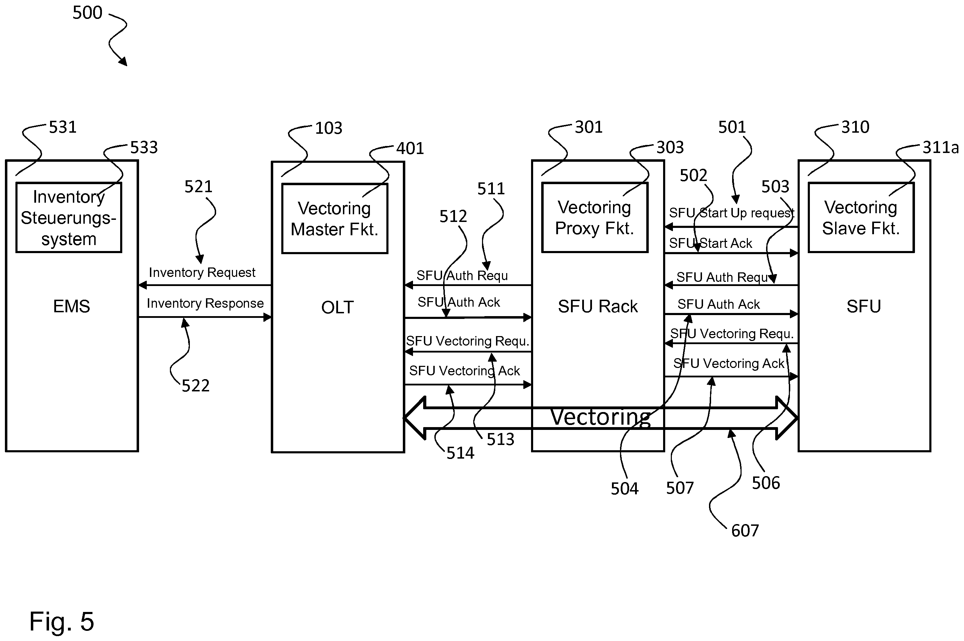

Fig. 5 zeigt eine schematische Darstellung der Nachrichtensequenzen 500 in dem Breitbandzugangsnetzwerks 200 aus Figur 2 gemäß einer zweiten Ausführungsform.

Die Nachrichtensequenzen 500 entsprechen den oben zu Figur 4 beschriebenen Nachrichtensequenzen 400. Allerdings wird nach positivem Abschluss der oben beschriebenen Nachrichtensequenzen das Vectoring-Verfahren 608 zwischen der Leitungsabschlussentität 103 und dem Glasfaseranschlussmodul 310 initialisiert.

Fig. 6 zeigt eine schematische Darstellung der Nachrichtensequenzen 600 in einem Breitbandzugangsnetzwerk 200 mit einem einzelnen Glasfaseranschlussmodul 310 gemäß einer Ausführungsform.

Nach dem Einschalten des Glasfaseranschlussmoduls 310 an die elektrische Stromversorgung können die im Folgenden beschriebenen Nachrichten ausgetauscht werden. Das Glasfaseranschlussmodul 310 sendet eine Nachricht "SFU Start Up request" 501 an die optische Leitungsabschlussentität 103, welche durch eine Nachricht "SFU Start Ack" 502 beantwortet wird. Das Glasfaseranschlussmodul 310 ist damit betriebsbereit. Danach sendet das Glasfaseranschlussmodul 310 eine Nachricht "SFU Auth request" 503 an die optische Leitungsabschlussentität 103, welche durch eine Nachricht "SFU Auth Ack" 504 beantwortet wird. Das Glasfaseranschlussmodul 310 ist damit authentifiziert. Danach sendet das Glasfaseranschlussmodul 310 eine Nachricht "SFU Vectoring request" 505 an die optische Leitungsabschlussentität 103, welche durch eine Nachricht "SFU Vectoring Ack" 506 beantwortet wird. Das Glasfaseranschlussmodul 310 ist damit im Vectoring-Verfahren, d.h. Kompensationsverfahren gegen Kanalübersprechen berücksichtigt und die Verzerrerkoeffizienten entsprechend angepasst.

Nach Empfang der Nachricht "SFU Auth request" 503 sendet die Leitungsabschlussentität 103 die Nachricht "Inventory Request" 521 weiter an das Elementenmanagementsystem 531, welches in seinem Steuerungsmodul 533 überprüft, ob das Glasfaseranschlussmodul 310 zum Zugang berechtigt ist, und bei positiver Prüfung darauf antwortet mit der Nachricht "Inventory Response" 522. In Antwort auf die Nachricht "Inventory Response" 522 wird die Nachricht "SFU Auth Ack" 504 in der Leitungsabschlussentität 103 erzeugt und an das Glasfaseranschlussmodul 310 gesendet.

Nach positivem Abschluss der oben beschriebenen Nachrichtensequenzen wird das Vectoring-Verfahren 507 zwischen der Leitungsabschlussentität 103 und dem Glasfaseranschlussmodul 310 initialisiert.

Ein Aspekt der Erfindung umfasst auch ein Computerprogrammprodukt, das direkt in den internen Speicher eines digitalen Computers geladen werden kann und Softwarecodeabschnitte umfasst, mit denen das zu den Figuren 5 bis 7 beschriebene Verfahren ausgeführt werden kann, wenn das Produkt auf einem Computer läuft. Das Computerprogrammprodukt kann auf einem computergeeigneten Medium gespeichert sein und computerlesbare Programmittel umfassen, die einen Computer veranlassen, das zu den Figuren 5 bis 7 beschriebene Verfahren auszuführen.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, einem WAN oder in einer Cloud angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 100:: Breitbandzugangsnetz nach ITU-T G.9701
- 101:: BRAS/BNG
- 102:: Aggregationsnetzwerk
- 103:: optische Leitungsabschlussentität bzw. OLT
- 104:: optische Netzwerkentität bzw. ONU/ONT
- 105:: stationäres Gateway, Heimnetzgateway
- 200:: Breitbandzugangsnetzwerk gemäß einer Ausführungsform
- 302:: optisches Signal
- 303:: Steuerungsmodul bzw. Vectoring Proxy Funktion
- 304:: verzweigte Mehrzahl von optischen Signalen
- 305:: optischer Splitter, PON Splitter
- 306:: Vorverzerrungskoeffizienten
- 308:: elektrisches Signal auf Teilnehmeranschlussleitung
- 318:: elektrisches Signal auf Teilnehmeranschlussleitung
- 328:: optisches Signal auf Teilnehmeranschlussleitung
- 315:: G.Fast bzw. xVDSL Einheit, G.Fast bzw. xVDSL Modem
- 325:: G.Fast bzw. xVDSL Einheit, G.Fast bzw. xVDSL Modem
- 335:: optischer Netzwerkabschluss, ONT
- 317:: stationäres Gateway, Residential Gateway
- 311, 311a, 311b, 311c:: Vorverzerrer bzw. Vectoring Slave Funktion
- 306, 306a, 306b, 306c:: Vorverzerrungskoeffizienten bzw. Schnittstellen zwischen Vectoring Proxy und Vectoring Slave zur Übertragung der Vorverzerrungskoeffizienten
- 313:: GEM Port bzw. optischer Port am Glasfaseranschlussmodul
- 310, 320,: 330:Glasfaseranschlussmodule bzw. SFUs, Single Fiber Units
- 301:: optische Netzwerkentität bzw. Rack mit SFUs bzw. ONU/ONT
- 312:: FTTH ONT
- 400:: Breitbandzugangsnetzwerk mit Darstellung der Nachrichtensequenzen gemäß einer Ausführungsform
- 401:: Steuerungsmodul in der optischen Leitungsabschlussentität bzw. Vectoring Master in der OLT
- 405:: Leistungssteuerungsmodul in optischer Netzwerkentität bzw. RPF Steuerung im SFU Rack
- 402:: Schnittstelle zur optischen Leitungsabschlussentität
- 407a, 407b, 407c:: elektrischer Port bzw. G.Fast oder xVDSL Port
- 409a, 409b, 409c:: optischer Port am Gastfaseranschlussmodul bzw. PON Backhaul an der SFU
- 408a, 408b, 408c:: elektrische Leitungen zwischen Leistungssteuerungsmodul 405 und Glasfaseranschlussmodulen
- 500:: Breitbandzugangsnetzwerk mit Darstellung der Nachrichtensequenzen gemäß einer Ausführungsform
- 501:: SFU Start Up request, Registrierung der SFU
- 502:: SFU Start Ack, Quittierung über Registrierung
- 503, 511:: SFU Authentication request, Anfrage nach Authentifizierung der SFU
- 504, 512:: SFU Auth Ack, Quittung der Authentifizierung
- 505, 513:: SFU Vectoring request, Anfrage nach Übertragung der Entzerrerkoeffizienten
- 506, 514:: SFU Vectoring Ack, Quittierung der Anfrage zu Entzerrerkoeffizienten
- 507, 607, 707:: Vectoring-Verfahren bzw. Kompensation gegen Kanalübersprechen
- 521:: Inventory request, Anfrage nach Inventory Daten
- 522:: Inventory response, Quittierung über Inventory Daten
- 531:: Element Management System, EMS
- 533:: Inventory Steuerungssystem
- 600:: Breitbandzugangsnetzwerk mit Darstellung der Nachrichtensequenzen gemäß einer Ausführungsform

## Patentansprüche

1. Optische Netzwerkentität (301) zum Empfangen eines optischen Signals (302), mit:
einer Mehrzahl von Glasfaseranschlussmodulen (310, 320, 330) zur Umsetzung einer Mehrzahl von optischen Signalen (304) in elektrische Signale (308, 318); und
einem Steuerungsmodul (303),
wobei jedes Glasfaseranschlussmodul (310, 320, 330) einen Vorverzerrer (311) zum Vorverzerren des elektrischen Signals (308, 318) aufweist, um ein Kanalübersprechen zu kompensieren,
wobei jedes Glasfaseranschlussmodul (310, 320, 330) mit der optischen Netzwerkentität (301) über elektrische Kontakte verbindbar ist,
**dadurch gekennzeichnet, dass**
das Steuerungsmodul (303) ausgebildet ist, ansprechend auf eine elektrische Verbindung eines Glasfaseranschlussmoduls (310, 320, 330) mit der optischen Netzwerkentität (301) das Glasfaseranschlussmodul (310, 320, 330) zu detektieren und dem detektierten Glasfaseranschlussmodul (310, 320, 330) Vorverzerrungskoeffizienten (306) zu übermitteln, und
wobei der Vorverzerrer (311) ausgebildet ist, das elektrische Signal (308, 318) mittels der übermittelten Vorverzerrungskoeffizienten (306) vorzuverzerren.

2. Optische Netzwerkentität (301) nach Anspruch 1,
wobei der Vorverzerrer (311) ausgebildet ist, das elektrische Signal (308, 318) gegen ein Nahendübersprechen (NEXT) und/oder ein Fernendübersprechen (FEXT) zu kompensieren.

3. Optische Netzwerkentität (301) nach Anspruch 1 oder 2,
wobei das Steuerungsmodul (303) ausgebildet ist, die Vorverzerrungskoeffizienten (306) abhängig von einer Anzahl detektierter Glasfaseranschlussmodul (310, 320, 330) zu berechnen.

4. Optische Netzwerkentität (301) nach Anspruch 1 oder 2,
wobei das Steuerungsmodul (303) eine Schnittstelle (402) zu einer optischen Leitungsabschlussentität (103) aufweist, die ausgebildet ist, eine Nachricht über das detektierte Glasfaseranschlussmodul (310, 320, 330) an die optische Leitungsabschlussentität (103) zu übermitteln und von der optischen Leitungsabschlussentität (103) die Vorverzerrungskoeffizienten (306) zu empfangen.

5. Optische Netzwerkentität (301) nach Anspruch 4,
wobei die Nachricht eine Identifikation des detektierten Glasfaseranschlussmoduls (310, 320, 330) umfasst.

6. Optische Netzwerkentität (301) nach einem der vorstehenden Ansprüche, ferner mit:
einem optischen Splitter (305), der ausgebildet ist, das optische Signal (302) zu empfangen und in die Mehrzahl von optischen Signalen (304) aufzuspalten.

7. Optische Netzwerkentität (301) nach einem der vorstehenden Ansprüche, ferner mit:
einem Rack, in das die jeweiligen Glasfaseranschlussmodule (310, 320, 330) einsteckbar sind,
wobei das Steuerungsmodul (303) ausgebildet ist, ansprechend auf ein Einstecken eines jeweiligen Glasfaseranschlussmoduls (310, 320, 330) in das Rack das jeweilige Glasfaseranschlussmodul (310, 320, 330) zu detektieren.

8. Optische Netzwerkentität (301) nach Anspruch 7,
wobei jedes Glasfaseranschlussmodul (310, 320, 330) einen teilnehmerseitigen Port aufweist, der ausgelegt ist, das entsprechende elektrische Signal (308, 318) zu einem Teilnehmeranschluss (315, 325) zu übermitteln; und
wobei jedes Glasfaseranschlussmodul (310, 320, 330) über den teilnehmerseitigen Port mit Strom versorgt wird, sobald das Glasfaseranschlussmodul (310, 320, 330) in das Rack gesteckt ist.

9. Optische Netzwerkentität (301) nach Anspruch 7 oder 8, ferner mit:
einem Leistungssteuerungsmodul (405), das elektrisch mit den jeweiligen Glasfaseranschlussmodulen (310, 320, 330) koppelbar ist, und ausgebildet ist, das Rack und das Steuerungsmodul (303) über zumindest eines der in das Rack gesteckten Glasfaseranschlussmodule (310, 320, 330) mit Strom zu versorgen.

10. Glasfaseranschlussmodul (310) zur Umsetzung eines optischen Signals (304a) in ein elektrisches Signal (308), mit:
einem optischen Anschluss (409a) zum Empfangen des optischen Signals (304a);
einem Prozessor (407a), der ausgebildet ist, das empfangene optische Signal (304a) in ein elektrisches Signal (308) umzusetzen;
einem Vorverzerrer (311a), der ausgebildet ist, das elektrische Signal (308) vorzuverzerren, um ein Kanalübersprechen zu kompensieren; und
**dadurch gekennzeichnet** mit
einer Schnittstelle zu einem Steuerungsmodul (303, 401), die ausgelegt ist, dem Vorverzerrer (311a) Vorverzerrungskoeffizienten (306a) zu übermitteln, und
wobei der Vorverzerrer (311a) ausgebildet ist, das elektrische Signal (308) mittels der übermittelten Vorverzerrungskoeffizienten (306a) vorzuverzerren.

11. Glasfaseranschlussmodul (310) nach Anspruch 10,
wobei der optische Anschluss (409a) ein PON Backhaul Modul umfasst.

12. Glasfaseranschlussmodul (310) nach Anspruch 10 oder 11,
wobei der Prozessor (407a) ausgelegt ist, das elektrische Signal (308) gemäß einem G.Fast oder xVDSL Protokoll aus dem optischen Signal (304a) zu erzeugen.

13. Glasfaseranschlussmodul (310) nach einem der Ansprüche 10 bis 12,
wobei die Schnittstelle zu dem Steuerungsmodul (303, 401) ferner ausgelegt ist, dem Steuerungsmodul (303, 401) eine Identifikation des Glasfaseranschlussmoduls (310) zu übermitteln.

14. Kommunikationssystem (200), mit:
einer optischen Leitungsabschlussentität (103) zum Bereitstellen eines optischen Signals (302);
einer optischen Netzwerkentität (301) nach einem der Ansprüche 1 bis 9 zum Umsetzen des optischen Signals in ein elektrisches Signal; und/oder
eines Glasfaseranschlussmoduls (310) nach einem der Ansprüche 10 bis 13 zum Umsetzen des optischen Signals in ein elektrisches Signal,
wobei die optische Leitungsabschlussentität (103) ausgelegt ist, dem Glasfaseranschlussmodul (310) Vorverzerrungskoeffizienten (306) zu übermitteln.

15. Kommunikationssystem (200) nach Anspruch 14,
wobei die optische Leitungsabschlussentität (103) ausgelegt ist, eine Identifikation des Glasfaseranschlussmoduls (310) zu detektieren und die Vorverzerrungskoeffizienten (306) abhängig von der Identifikation des Glasfaseranschlussmoduls (310) zu übermitteln.

## Claims

1. Optical network entity (301) for receiving an optical signal (302), comprising:
a plurality of optical fibre connection modules (310, 320, 330) for converting a plurality of optical signals (304) into electrical signals (308, 318); and
a control module (303),
wherein each optical fibre connection module (310, 320, 330) has a predistorter (311) for predistorting the electrical signal (308, 318) in order to compensate for channel crosstalk,
wherein each optical fibre connection module (310, 320, 330) is connectable to the optical network entity (301) via electrical contacts,
**characterized in that**
the control module (303) is configured, in response to an electrical connection of an optical fibre connection module (310, 320, 330) to the optical network entity (301), to detect the optical fibre connection module (310, 320, 330) and to communicate predistortion coefficients (306) to the detected optical fibre connection module (310, 320, 330), and
wherein the predistorter (311) is configured to predistort the electrical signal (308, 318) by means of the communicated predistortion coefficients (306).

2. Optical network entity (301) according to Claim 1,
wherein the predistorter (311) is configured to compensate the electrical signal (308, 318) in respect of near end crosstalk (NEXT) and/or far end crosstalk (FEXT) .

3. Optical network entity (301) according to Claim 1 or 2,
wherein the control module (303) is configured to calculate the predistortion coefficients (306) depending on a number of detected optical fibre connection modules (310, 320, 330).

4. Optical network entity (301) according to Claim 1 or 2,
wherein the control module (303) has an interface (402) to an optical line termination entity (103), which is configured to communicate a message about the detected optical fibre connection module (310, 320, 330) to the optical line termination entity (103) and to receive the predistortion coefficients (306) from the optical line termination entity (103).

5. Optical network entity (301) according to Claim 4,
wherein the message comprises an identification of the detected optical fibre connection module (310, 320, 330) .

6. Optical network entity (301) according to any of the preceding claims, furthermore comprising:
an optical splitter (305) configured to receive the optical signal (302) and to split it into the plurality of optical signals (304).

7. Optical network entity (301) according to any of the preceding claims, furthermore comprising:
a rack, into which the respective optical fibre connection modules (310, 320, 330) are insertable,
wherein the control module (303) is configured, in response to insertion of a respective optical fibre connection module (310, 320, 330) into the rack, to detect the respective optical fibre connection module (310, 320, 330).

8. Optical network entity (301) according to Claim 7,
wherein each optical fibre connection module (310, 320, 330) has a subscriber-side port designed to communicate the corresponding electrical signal (308, 318) to a subscriber connection (315, 325); and
wherein each optical fibre connection module (310, 320, 330) is supplied with power via the subscriber-side port as soon as the optical fibre connection module (310, 320, 330) is inserted into the rack.

9. Optical network entity (301) according to Claim 7 or 8, furthermore comprising:
a power control module (305), which is electrically couplable to the respective optical fibre connection modules (310, 320, 330) and is configured to supply the rack and the control module (303) with power via at least one of the optical fibre connection modules (310, 320, 330) inserted into the rack.

10. Optical fibre connection module (310) for converting an optical signal (304a) into an electrical signal (308), comprising:
an optical connection (409a) for receiving the optical signal (304a);
a processor (407a) configured to convert the received optical signal (304a) into an electrical signal (308);
a predistorter (311a) configured to predistort the electrical signal (308) in order to compensate for channel crosstalk; and
**characterized by**
an interface to a control module (303, 401), which interface is designed to communicate predistortion coefficients (306a) to the predistorter (311a), and
wherein the predistorter (311a) is configured to predistort the electrical signal (308) by means of the communicated predistortion coefficients (306a).

11. Optical fibre connection module (310) according to Claim 10,
wherein the optical connection (409a) comprises a PON backhaul module.

12. Optical fibre connection module (310) according to Claim 10 or 11,
wherein the processor (407a) is designed to generate the electrical signal (308) from the optical signal (304a) in accordance with a G. Fast or xVDSL protocol.

13. Optical fibre connection module (310) according to any of Claims 10 to 12,
wherein the interface to the control module (303, 401) is furthermore designed to communicate an identification of the optical fibre connection module (310) to the control module (303, 401).

14. Communication system (200), comprising:
an optical line termination entity (103) for providing an optical signal (302);
an optical network entity (301) according to any of Claims 1 to 9 for converting the optical signal into an electrical signal; and/or
an optical fibre connection module (310) according to any of Claims 10 to 13 for converting the optical signal into an electrical signal,
wherein the optical line termination entity (103) is designed to communicate predistortion coefficients (306) to the optical fibre connection module (310).

15. Communication system (200) according to Claim 14,
wherein the optical line termination entity (103) is designed to detect an identification of the optical fibre connection module (310) and to communicate the predistortion coefficients (306) depending on the identification of the optical fibre connection module (310) .

## Revendications

1. Entité de réseau optique (301) destinée à recevoir un signal optique (302), comprenant :
une pluralité de modules de raccordement de fibres de verre (310, 320, 330) destinés à convertir une pluralité de signaux optiques (304) en signaux électriques (308, 318) ; et
un module de commande (303),
dans laquelle chaque module de raccordement de fibres de verre (310, 320, 330) comporte un dispositif de prédistorsion (311) pour la prédistorsion du signal électrique (308, 318) afin de compenser la diaphonie de canal,
dans laquelle chaque module de raccordement de fibres de verre (310, 320, 330) peut être connecté à l'entité de réseau optique (301) par l'intermédiaire de contacts électriques,
**caractérisé en ce que** le module de commande (303) est conçu pour détecter le module de raccordement de fibres de verre (310, 320, 330) en réponse à une connexion électrique d'un module de raccordement de fibres de verre (310, 320, 330) à l'entité de réseau optique (301) et pour transmettre des coefficients de prédistorsion (306) au module de raccordement de fibres de verre (310, 320, 330) détecté,
dans laquelle le dispositif de prédistorsion (311) est conçu pour effectuer une prédistorsion du signal électrique (308, 318) au moyen des coefficients de prédistorsion (306) transmis.

2. Entité de réseau optique (301) selon la revendication 1,
dans laquelle le dispositif de prédistorsion (311) est conçu pour compenser le signal électrique (308, 318) vis-à-vis d'une diaphonie de proximité (NEXT) et/ou d'une diaphonie distante (FEXT).

3. Entité de réseau optique (301) selon la revendication 1 ou 2,
dans laquelle le module de commande (303) est conçu pour calculer les coefficients de prédistorsion (306) en fonction d'un nombre de modules de raccordement de fibres de verre (310, 320, 330) détectés.

4. Entité de réseau optique (301) selon la revendication 1 ou 2,
dans laquelle le module de commande (303) comporte une interface (402) avec une entité de terminaison de ligne optique (103) conçue pour transmettre un message à l'entité de terminaison de ligne optique (103) par l'intermédiaire du module de raccordement de fibres de verre (310, 320, 330) détecté et pour recevoir les coefficients de prédistorsion (306) en provenance de l'entité de terminaison de ligne optique (103).

5. Entité de réseau optique (301) selon la revendication 4,
dans laquelle le message comprend une identification du module de raccordement de fibres de verre (310, 320, 330) détecté.

6. Entité de réseau optique (301) selon l'une des revendications précédentes, comprenant en outre :
un séparateur optique (305) conçu pour recevoir le signal optique (302) et le diviser en la pluralité de signaux optiques (304).

7. Entité de réseau optique (301) selon l'une des revendications précédentes, comprenant en outre :
un bâti dans lequel les modules de raccordement de fibres de verre (310, 320, 330) respectifs peuvent être enfichés,
dans laquelle le module de commande (303) est conçu pour détecter le module de raccordement de fibres de verre (310, 320, 330) respectif en réponse à un enfichage d'un module de raccordement de fibres de verre (310, 320, 330) respectif dans le bâti.

8. Entité de réseau optique (301) selon la revendication 7,
dans laquelle chaque module de raccordement de fibres de verre (310, 320, 330) comporte un port côté abonné conçu pour transmettre le signal électrique correspondant (308, 318) à un raccordement d'abonné (315, 325), et
dans laquelle chaque module de raccordement de fibres de verre (310, 320, 330) est alimenté par l'intermédiaire du port côté abonné dès que le module de raccordement de fibres de verre (310, 320, 330) est enfiché dans le bâti.

9. Entité de réseau optique (301) selon la revendication 7 ou 8, comprenant en outre :
un module de commande de puissance (405) qui peut être couplé électriquement aux modules de raccordement de fibres de verre (310, 320, 330) respectifs et qui est conçu pour alimenter le bâti et le module de commande (303) par l'intermédiaire d'au moins l'un des modules de raccordement de fibres de verre (310, 320, 330) enfichés dans le bâti.

10. Module de raccordement de fibres de verre (310) destiné à convertir un signal optique (304a) en un signal électrique (308), comprenant :
un raccord optique (409a) destiné à recevoir le signal optique (304a) ;
un processeur (407a) conçu pour convertir le signal optique reçu (304a) en un signal électrique (308) ;
un dispositif de prédistorsion (311a) conçu pour effectuer une prédistorsion du signal électrique (308) afin de compenser la diaphonie de canal ; et
**caractérisé par** une interface avec un module de commande (303, 401), conçue pour transmettre des coefficients de prédistorsion (306a) au dispositif de prédistorsion (311a), et
dans lequel le dispositif de prédistorsion (311a) est conçu pour soumettre le signal électrique (308) à une prédistorsion au moyen des coefficients de prédistorsion transmis (306a).

11. Module de raccordement de fibres de verre (310) selon la revendication 10,
dans lequel le raccord optique (409a) comprend un module de raccordement PON.

12. Module de raccordement de fibres de verre (310) selon la revendication 10 ou 11,
dans lequel le processeur (407a) est conçu pour générer le signal électrique (308) conformément à un protocole G.Fast ou xVDSL à partir du signal optique (304a).

13. Module de raccordement de fibres de verre (310) selon l'une des revendications 10 à 12,
dans lequel l'interface avec le module de commande (303, 401) est en outre conçue pour transmettre une identification du module de raccordement de fibres de verre (310) au module de commande (303, 401).

14. Système de communication (200), comprenant :
une entité de terminaison de ligne optique (103) destinée à fournir un signal optique (302) ;
une entité de réseau optique (301) selon l'une des revendications 1 à 9 destinée à convertir le signal optique en un signal électrique ; et/ou
un module de raccordement de fibres de verre (310) selon l'une des revendications 10 à 13 destiné à convertir le signal optique en un signal électrique,
dans lequel l'entité de terminaison de ligne optique (103) est conçue pour transmettre des coefficients de prédistorsion (306) au module de raccordement de fibres de verre (310).

15. Système de communication (200) selon la revendication 14,
dans lequel l'entité de terminaison de ligne optique (103) est conçue pour détecter une identification du module de raccordement de fibres de verre (310) et pour transmettre les coefficients de prédistorsion (306) en fonction de l'identification du module de raccordement de fibres de verre (310).
